# EUROPEAN PATENT SPECIFICATION

(11) **EP 0 604 009 B1**
(45) Date of publication and mention of the grant of the patent: **06.05.1999**
(21) Application number: 93308762.9
(22) Date of filing: 02.11.1993
(51) Int. Cl.: H04N 7/18, G08B 13/194

(54) **Computer operation of video camera**
Computerbedienung einer Videokamera
Commande d'une caméra vidéo par ordinateur

(30) Priority: 21.12.1992 US 999333
(43) Date of publication of application: 29.06.1994
(73) Proprietor: International Business Machines Corporation, Armonk, N.Y. 10504 (US)
(72) Inventor: Bowater, Ronald, Romsey, Hampshire SO51 8ST (GB); Ahearn, William, Hershey, Pennsylvania 17033 (US); Aldred, Barry Keith, Winchester, Hampshire SO22 5LE (GB); Sachar, Howard, New Paltz, New York 12561 (US); Chodorow, Martin, New York 10021 (US); Ravin, Yael, New Paltz, New York 12561 (US)
(74) Representative: Burt, Roger James, Dr.

(56) References cited:
- WO-A-88/04082
- JP-A- 3 274 983
- US-A- 4 148 062
- US-A- 4 198 653
- US-A- 4 807 027
- US-A- 4 996 592
- US-A- 5 153 728
- NTT REVIEW vol. 4, no. 4 , July 1992 , TOKYO, JP pages 86 - 90 T. HOSHI ET AL. 'TELE-EYE: real-time visual communication system using ISDN'

## Description

The present invention relates to the remote operation of a video camera attached to a first computer, the camera being operated at least partly under the control of a second remote computer.

Many technical areas require the acquisition of video signals, for example electronic surveillance operations, robotic machinery, and desk top conferencing. In recent years it has become possible to include in such video systems a computer or microprocessor to provide image processing facilities such as motion detection, edge detection, and so on. GB 2179222A describes a video system in which the video signal is first fed through a spectral analyser, to produce a series of images having different resolutions (depending on the bandpass selected). These images are then fed into one or more windowing devices. The overall result is typically to produce two output images, one equivalent to the original field of view but of lower resolution, and one of relatively high resolution but representing just a selected area of the original field of view. This approach reduces the amount of data that must be passed to the computer that performs the edge/motion detection, thereby reducing the burden on the computer which may not otherwise be able to handle the high data rate produced by a video camera.

A separate problem arises where the video signal is to be transmitted to a separate location, for example in video monitoring for security purposes of electrical substations, level crossings (road/railway crossings), storage warehouses and so on. Normally these locations are not manned on a regular basis, or alternatively are not large enough to justify a complete security system, for example in the case of small village banks. One possibility, described in GB2253534A, is to simply record the video signal at the location concerned. Although this provides a record for subsequent analysis in the event of a disturbance, it does not allow real-time monitoring and the possibility of preventative action (eg calling the fire service if a fire is seen to start). GB2253534A additionally proposes a facility to automatically dial a central control unit if motion is detected. However, this arrangement lacks flexibility and is very limited in the type of responses that can be adopted.

In order to provide the most effective surveillance of a site, it is necessary to transmit the signal from the remote site to a central receiving station. One possibility is to use specially provided or leased coaxial lines to transmit the analogue video signal to the central receiving station. However, the cost of connecting and maintaining such lines to a large number of locations is very high, especially since the locations may be widely dispersed, relatively inaccessible, or simply constantly changing.

It therefore becomes important to try to reduce the bandwidth required to transmit the video surveillance signal. US 4951147 describes one approach, in which the video camera has an associated microprocessor attached to provide on-site "intelligence". The surveillance station is connected to the central receiving station by a telephone line for example. As with GB2253534A it is suggested that the microprocessor is used to perform motion detection, and if the amount of motion is above a certain threshhold the central receiving station is auto-dialled. US 4951147 further teaches that at this stage it is possible for the central receiving station to take over control of the camera, via some form of two-way link with the surveillance station.

TELE-EYE - Real-time Visual Communication System using ISDN by Takashi Hoshi, Minoru Ohyama, and Yoshihiro Shimazu (2254 NTT Review, 4(1992), July, p86-90) discloses a system for remote viewing through a video camera attached to a first computer, which in turn is linked via a communications network to a second computer, over which the video signal generated by the video camera can be sent in compressed form. Commands to pan, tilt, zoom and focus the camera can be sent over the communications network from the second computer to the first computer. US 4996592 discloses video communication apparatus which is capable of electronically adjusting the field of view of a video frame using a remote control circuit attached via an input terminal.

However, such systems still lack flexibility, for example in the relatively unsophisticated motion detection threshhold procedure. The present invention seeks to overcome such problems by greatly increasing the degree of remote control available. The ensuing benefits are of value not only for remote video surveillance, but also in other applications such as video conferencing, where computer control of a remote camera is again important.

Accordingly, the invention provides a method of remotely operating a video camera attached to a first computer by means of a second computer, the first and second computers having a link for digital communications including the exchange of control information, wherein the video signal generated by the video camera has a bandwidth greater than the bandwidth available on said communications link so that said video signal can only be transmitted over said communications link at a reduced resolution, based on a predetermined frame rate, said method comprising the steps of:
transmitting an image with a whole field of view from the video camera to the second computer over said communications link at said reduced resolution;
selecting one or more portions of the field of view represented by said image at the second computer, and transmitting information describing the selected portions to the first computer over said communications link;
processing the video signal generated by said video camera to retain those parts of the video signal corresponding to the selected portions of the whole field of view as specified in said transmitted information, and to discard the remaining parts of the video signal corresponding to the portions of the whole field of view which were not selected; and
transmitting said processed video signal from said first computer to said second computer over said communications link at said predetermined frame rate and at a resolution greater than said reduced resolution, up to a maximum resolution of the original image.

The invention further provides a method of remotely operating a video camera attached to a first computer by means of a second computer, the first and second computers having a link for digital communications including the exchange of control information, wherein the video signal generated by the video camera has a bandwidth greater than the bandwidth available on said communications link so that said video signal can only be transmitted over said communications link at a reduced resolution, said method comprising the steps of:
transmitting an image with a whole field of view from the video camera to the second computer over said communications link at a resolution greater than said reduced resolution over a time period greater than the interval between successive frames of the video signal;
selecting one or more portions of the field of view represented by said image at the second computer, and transmitting information describing the selected portions to the first computer over said communications link;
processing the video signal generated by said video camera to retain those parts of the video signal corresponding to the selected portions of the whole field of view as specified in said transmitted information, and to discard the remaining parts of the video signal corresponding to the portions of the whole field of view which were not selected; and
transmitting said processed video signal from said first computer to said second computer over said communications link at a resolution greater than said reduced resolution up to a maximum resolution of the original image, wherein successive frames of the video signal are transmitted over a time period identical with said interval between successive frames of said video signal.

Thus a user at the second computer can remotely define regions of interest within the field of view of the video camera at the first computer. Information not within the selected regions is discarded, for example it is not transmitted back to the second computer, or not submitted to motion detection analysis. Typically the invention will be employed in video conferencing or surveillance situations where the communications line between the two computers is not capable of carrying the full bandwidth of the video camera output. In one embodiment of the invention there is a set-up phase to allow extra time for the first image to be transmitted in sufficient detail to provide the user at the second computer with an accurate picture of the initial field of view of the video camera.

In one preferred embodiment the method further comprises the step of examining at the first computer differences between successive video images within the selected portions of the field of view to detect movement. The idea of detecting motion by comparing successive images is well-known, but has previously been problematic when the field of view of the camera has contained some region of relatively common, but uninteresting, movement, such as traffic on a road or a constantly moving piece of machinery. It has been very difficult to prevent such movement triggering positive motion detection. However, the invention allows the user at the second computer to exclude regions from the motion detection analysis, so as to concentrate on movement in the areas of particular interest.

The ability to define and exclude areas of uninteresting movement is beneficial even when motion detection analysis is not being performed, but rather a signal is being continuously transmitted to the second computer. In such circumstances the constant movement significantly increases the bandwidth requirements, since it has a very adverse impact on the efficiency of the data compression. Minimising the amount of movement with the selected regions of the field of view therefore helps to reduce bandwidth requirements.

In another preferred embodiment, a sequence of successively overlapping portions of the field of view are selected to pan across the field of view of the video camera. This facility is especially useful for example in video conferencing applications, in which the user at the second computer can pan the field of view of the video camera at the first computer - eg to transfer from one conference participant at the first computer to another participant. This approach exploits the fact that in many such applications the quality of image received at the second computer is dominated by the bandwidth of the link, rather than the quality of the original image from the video camera. Therefore to save bandwidth only a portion of this original image needs to be transmitted. This approach obviates the need for the remote user at the second computer to have the ability to mechanically move the video camera, which may be expensive and complicated to implement reliably.

In a similar manner it is also possible to provide a software-based zoom function (ie without any control over the optics of the video camera itself). Thus in a bandwidth-limited situation the resolution of the transmitted image is less than that of the original image from the video camera. If only a relatively small region of the field of view is selected for transmission, then for the same bandwidth it will be possible to transmit this at greater resolution than the whole field of view (up to a maximum resolution of the original image). The ability to define a small region and study this at high resolution therefore effectively provides the user at the second computer with the facility to zoom in and out on any features of particular interest within the field of view.

In a preferred embodiment the step of using the transmitted information to discard at the first computer those portions of the field of view not selected comprises the steps of: deriving a binary bit map from the information describing the selected portions; storing said bit map into a register; and combining said bit map with each incoming video frame using a logical AND function.

Thus the first computer acts upon the receipt of the transmitted information by loading a binary bit map into a register, with 1s stored in areas of the register corresponding to the selected regions of the field of view, and 0s for those regions not selected. The combination of the register with each incoming video frame using a logical AND function therefore effectively masks out those regions of each frame not selected (it would of course be equally possible to use 0s for the selected regions and 1s for the non-selected regions, in which case a logical NAND function would be used). Other ways of implementing the image selection process at the first computer, would simply be to only read out the selected portions of the field of view from the frame buffer. Alternatively, the computer could read in the whole frame, and then simply use software techniques to discard the unwanted regions. However, the solution based on the use of a hardware register is likely to be the fastest approach.

The invention also provides a video workstation comprising a video camera attached to a first computer, the first computer being linkable over a network to a second computer for digital communications including the exchange of control information between the first and second computers, wherein the video signal generated by the video camera has a bandwidth greater than the bandwidth available on said communications link so that said video signal can only be transmitted over said communications link at a reduced resolution, based on a predetermined frame rate, said workstation comprising:
means for transmitting an image with a whole field of view from the video camera to the second computer over said communications link at said reduced resolution;
means for selecting one or more portions of the field of view represented by said image at the second computer, and transmitting information describing the selected portions to the first computer over said communications link;
means for processing the video signal generated by said video camera to retain those parts of the video signal corresponding to the selected portions of the whole field of view as specified in said transmitted information, and to discard the remaining parts of the video signal corresponding to the portions of the whole field of view which were not selected; and
means for transmitting said processed video signal from said first computer to said second computer over said communications link at said predetermined frame rate and at a resolution greater than said reduced resolution, up to a maximum resolution of the original image.

The invention further provides a video workstation comprising a video camera attached to a first computer, the first computer being linkable over a network to a second computer for digital communications including the exchange of control information between the first and second computers, wherein the video signal generated by the video camera has a bandwidth greater than the bandwidth available on said communications link so that said video signal can only be transmitted over said communications link at a reduced resolution, said workstation comprising:
means for transmitting an image with a whole field of view from the video camera to the second computer over said communications link at a resolution greater than said reduced resolution over a time period greater than the interval between successive frames of the video signal;
means for selecting one or more portions of the field of view represented by said image at the second computer, and transmitting information describing the selected portions to the first computer over said communications link;
means for processing the video signal generated by said video camera to retain those parts of the video signal corresponding to the selected portions of the whole field of view as specified in said transmitted information, and to discard the remaining parts of the video signal corresponding to the portions of the whole field of view which were not selected; and
means for transmitting said processed video signal from said first computer to said second computer over said communications link at a resolution greater than said reduced resolution up to a maximum resolution of the original image, wherein successive frames of the video signal are transmitted over a time period identical with said interval between successive frames of said video signal.

In a preferred embodiment the means for using the transmitted information to discard those portions of the field of view not selected comprises: means for deriving a binary bit map from the information describing the selected portions; a register for storing said bit map; and means for combining said bit map with each incoming video frame using a logical AND function.

An embodiment of the invention will now be described by way of example with reference to the following drawings:
Figure 1 illustrates the remote operation of a video camera in accordance with the invention;
Figure 2 illustrates the definition at the second computer of a selected region of the field of view of the video camera;
Figure 3 illustrates a sample image obtained by the video camera;
Figure 4 illustrates the image of Figure 3 with degraded resolution;
Figure 5 illustrates a subimage of Figure 4; and
Figure 6 illustrates the same subimage as Figure 5, but with the resolution of Figure 4.

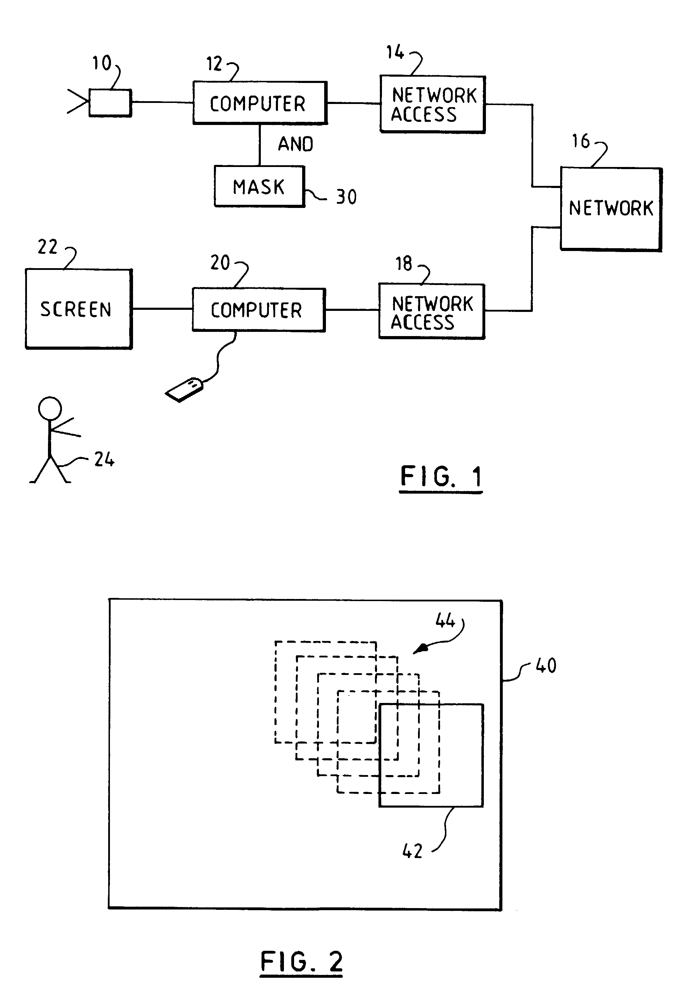

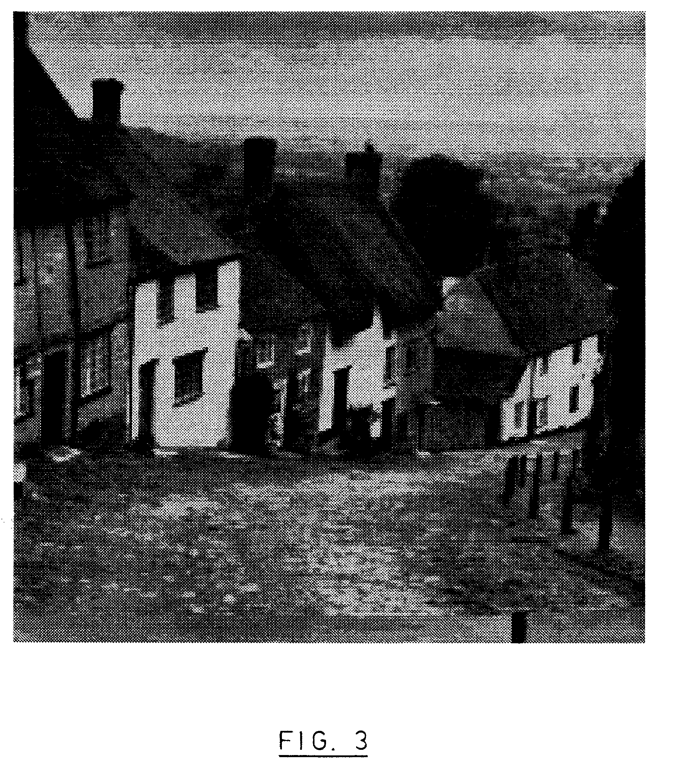

A video camera 10 at a first location is attached to a workstation 12 which includes image processing facilities. The workstation in turn contains a network access device 14, such as an ISDN card, which allows it to communicate via the relevant network 16 with a second workstation 20. The second workstation likewise contains image processing facilities, and a screen 22 on which to display a signal derived from the output of the video camera. If the arrangement of Figure 1 is to be used in remote video surveillance, then the first workstation is likely to be unmanned, instead being controlled by a user 24 at the second workstation. Alternatively, in a video conferencing application, there are likely to be users at each end, but it is still desirable that the camera at the first workstation can be controlled by the user at the second workstation. In such a video conferencing situation there is also likely to be appropriate equipment to provide a reciprocal function, whereby the user at the first workstation can see on a screen the output from a video camera at the second workstation (not shown in Figure 1).

The network link connecting the two workstations is typically either of limited fixed bandwidth or charges in proportion to bandwidth used (or both), resulting in the need to reduce the bandwidth of video transmissions, either to ensure that the limited fixed bandwidth is not exceeded, or to minimise cost. The first workstation therefore includes data compression tools, such as DVI, MPEG, or any other appropriate video compression technique (typically these will be implemented in hardware by a special-purpose chip). Suitable techniques are well-known to the person skilled in the art, and so will not be described further.

In a video conferencing environment, the compressed video signal is then transmitted from the first to the second workstation, where it is decompressed and displayed on the screen. The same procedure may be used in video surveillance operations, or alternatively a motion detection analysis is performed (note that the motion detection analysis can actually be performed based on the data compression, since the less effective the temporal compression - ie between successive frames - the greater the amount of motion occurring). Providing the amount of motion in the video signal is below a predetermined threshhold, no action is taken. However, once the threshhold is exceeded, then the workstation can initiate whatever course of action is appropriate - eg setting off an alarm, or auto-dialling the second workstation and transmitting to it the compressed video signal.

As part of its image processing facility, the first workstation includes a register 30 which is used to store a binary mask. This mask is then combined with each frame in turn from the video signal using a simple logical AND function. Only those areas of the video frames which correspond to ones in the mask retain their original values, with the remaining areas of the mask which contain zeros effectively blocking out the corresponding areas of the video frames.

The contents of the video mask can be updated remotely from the second workstation by sending appropriate control information over the link to the first workstation, which can then load the requisite values into the mask. Providing the blocking pattern is relatively simple (eg either blocking or transmitting a rectangular window), then the control information needed to specify the mask (eg the coordinates of the rectangle) is extremely compact and so will not impact traffic on the communications link.

The user at the second workstation can select which portion of the image to view by simply transmitting a mask which blocks out the remainder of the image. The selected portion needs not be constant, but may be movable under user control (eg by repositioning a window under mouse control). Thus the remote user is provided with the facility to pan the field of view under software control, with no actual mechanical motion of the camera required. This situation is illustrated in Figure 2, in which box 42 represents an initially selected portion of the field of view 40. The series of boxes 44 then shown in dotted lines represents successively selected areas of viewing as the user at the second computer pans across the field of view of the video camera (typically the user would do this by dragging box 42 using a mouse, rather than explicitly defining each new area).

Normally there will be a set-up phase at the start of operations in which the first computer transmits a full field of view image to the second computer. Whilst this may be compressed somewhat (eg by sub-sampling) it should still be of sufficient clarity to give the user at the second computer an accurate picture of the field of view of the camera (thus the time taken for the transmission is likely to be longer than the interval between successive frames for the video camera). On receipt of this image, the user at the second computer can select those regions of interest. This can be done positively (ie marking those regions of interest) or negatively (ie erasing those areas not of interest) using standard graphical user interface techniques. It may also be possible to give the user some estimate of the frame transmission rate that will be obtained given the selected portion(s) in view of the bandwidth of the communications link between the two computers (this may of course prompt the user to change the selections).

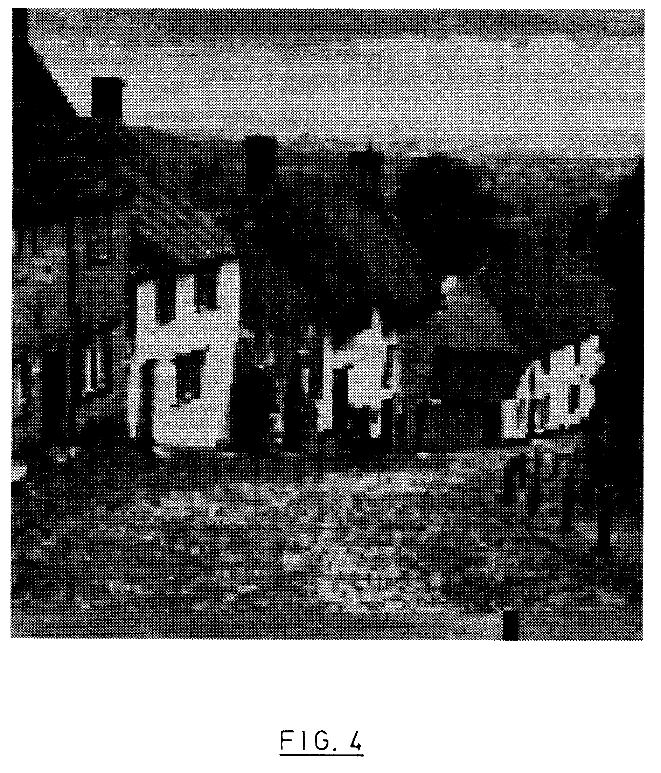

The ability to remotely control the viewing area is of particular benefit in situations where the link between the computer has insufficient bandwidth to transmit the full field of view of the video camera at the required resolution. As a consequence of having to reduce the bandwidth of the video signal transmitted over the link, there is likely to be a degradation in image quality received at the second workstation. It may be necessary to reduce both the frame rate and the quality of the image transmitted. The situation is illustrated in Figures 3 and 4. Figure 3 shows an image having 512 by 512 pixels. For a frame rate of 50 Hz, with one byte per pixel, this represents a data rate of 100 Mbits s⁻¹. By contrast, a standard ISDN link has a capacity perhaps only 0. 1% of this. The data compression algorithm typically reduces the data rate by say a factor of 10 without noticeable degradation of the image, and maybe the frame rate can also be reduced by a factor of 10, but this still leaves a further factor of 10 reduction required. One way to achieve this is simply to subsample the image (ie replace every 4 pixels by one in each direction) prior to the actual data compression. The resulting image is shown in Figure 4 which is taken from Figure 3, but with the data content reduced by 16 by producing an image of 128 by 128 pixels (this would then be the input image to the data compression routines). The result of the limited bandwidth available to transmit an image is therefore that the received image quality is determined normally by the available bandwidth, rather than the quality of the image originally captured by the video camera.

If the communications link over which the video signal is being transmitted has a fixed bandwidth, then reducing the field of view will allow the resolution in the transmitted region to be improved - ie effectively this will be like zooming in on the selected region. Alternatively the reduced field of view may be viewed with the same pixel resolution as the whole, leading to a reduction in the required bandwidth.

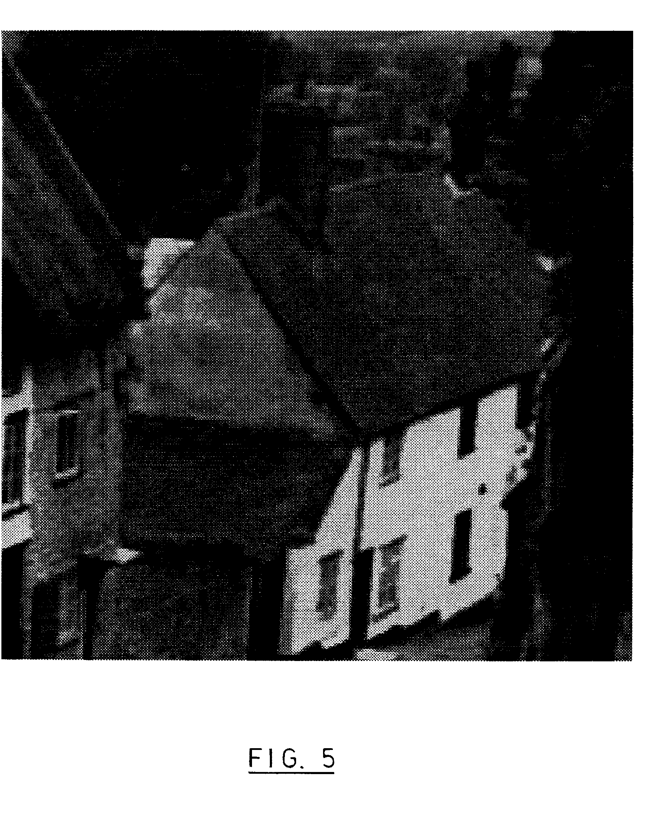

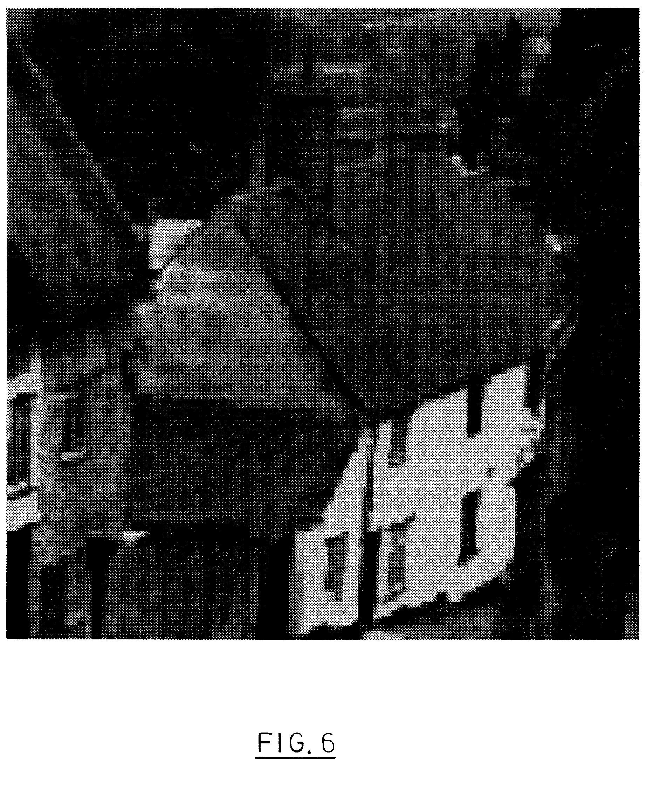

This situation is illustrated in Figures 5 and 6. Figure 5 depicts one particular 200 by 200 pixel subset of the original data, whilst Figure 6 shows the same region depicted with a 50 by 50 pixel resolution (ie effectively selected from Figure 4). This reduced region can be defined very easily by the user at the second workstation for example by simply drawing a square around the house in question and then transmitting the coordinates of this square to the first workstation, which then writes the appropriate bits into the mask. Clearly it requires less bandwidth to transmit Figure 6 than Figure 4. Thus if the communications link has the same bandwidth as discussed above that allows the image of Figure 4 to be transmitted at a particular frame rate, then transmitting the subimage of Figure 6 at the same frame rate will not require the whole bandwidth of the link. This allows the possibility of using the excess bandwidth to transmit the subset of Figure 6 at an improved resolution. In this particular case, given the linear reduction in image size by about 2.5, the resolution in terms of numbers of pixels could be correspondingly improved (ie to 125 by 125 pixels for the subimage) for the same bandwidth, other things, such as data compression efficiency, being equal. Note that this would still be short of the maximum resolution capable of being obtained from the original video camera image as represented by Figure 5. The increased resolution available when a subset of the image is selected effectively provides a software-based zoom function. The power of the zoom is limited by the available bandwidth for transmitting the necessary number of pixels, and the original resolution of the image.

An important application of the ability to select various regions of an image remotely is in video surveillance operations, where for example motion detection analysis is being performed. Often it is necessary or desirable to include within the field of view of the camera areas of activity which do not represent the primary focus of interest. For example, a security camera monitoring the outside of a building may include part of a road within its field of view. The regular flow of traffic along the road is not of interest, only movement in and out of the building, yet the former may continually trigger motion sensitive software. In this situation, the user at the second computer is able to define a mask shape so as to exclude the road. Thus any motion detection analysis will be performed only on the building itself, and effectively ignore traffic movements.

The use of a masking template will also be of great benefit in video surveillance applications which do transmit a continuous video signal to the second computer. Areas blocked out can be compressed very efficiently taking up minimal bandwidth, and so leave more bandwidth available for the non-blocked out portions of the video signal. Furthermore, if areas of uninteresting motion are excluded, this can have a particularly advantageous impact on bandwidth requirements, since such areas are difficult to compress efficiently given the continual movement.

It should be appreciated that it is quite possible in such video surveillance operations to use the data compression procedures firstly to generate a signal for transmission to a remote station, and secondly as an input to a motion detection system. These two processes can act in parallel to provide maximum flexibility and intelligence, so that maybe the motion detection system is set to automatically trigger some activity above a given threshhold of movement (eg locking of particular doors, sounding an alarm, or alerting a user at the second computer), whilst the person at the second computer remotely monitoring the situation has the power to perform similar actions in response to seeing certain actions in the video signal.

In the above discussion, the region of interest in an image has been defined by the contents of the mask which is then logically combined with each incoming video frame. The blanked out portions can then be effectively discarded by the compression or motion detection analysis. It should be appreciated however that there are many other alternative ways of implementing the selection process at the first computer. For example, the information regarding the regions of interest may be used by the first computer to selectively read the frame buffer of the video camera, thereby automatically discarding the remaining portions of the frame. Alternatively, the whole process may be performed in software, with the computer reading in complete images and then selecting appropriate portions to transmit or submit to motion detection analysis.

All the methods so far described have used a binary selection approach - ie a particular area is either selected or not selected. One possible enhancement would be to allow regions to be defined having different levels of interest. For example, on a scale of 0-5, then 0 could indicate regions to be completely masked out, with the remaining numbers indicating priority in terms of bandwidth - ie the higher the number for a region, the larger the allocation of bandwidth for a given number of pixels. This offers the user at the second computer still greater sophistication and flexibility in control of the video camera.

## Claims

1. A method of remotely operating a video camera (10) attached to a first computer (12) by means of a second computer (20), the first and second computers having a link (16) for digital communications including the exchange of control information, wherein the video signal generated by the video camera has a bandwidth greater than the bandwidth available on said communications link so that said video signal can only be transmitted over said communications link at a reduced resolution, based on a predetermined frame rate, said method comprising the steps of:
transmitting an image with a whole field of view from the video camera to the second computer over said communications link at said reduced resolution;
selecting one or more portions (42) of the field of view (44) represented by said image at the second computer, and transmitting information describing the selected portions to the first computer over said communications link;
processing the video signal generated by said video camera to retain those parts of the video signal corresponding to the selected portions of the whole field of view as specified in said transmitted information, and to discard the remaining parts of the video signal corresponding to the portions of the whole field of view which were not selected; and
transmitting said processed video signal from said first computer to said second computer over said communications link at said predetermined frame rate and at a resolution greater than said reduced resolution, up to a maximum resolution of the original image.

2. A method of remotely operating a video camera (10) attached to a first computer (12) by means of a second computer (20), the first and second computers having a link (16) for digital communications including the exchange of control information, wherein the video signal generated by the video camera has a bandwidth greater than the bandwidth available on said communications link so that said video signal can only be transmitted over said communications link at a reduced resolution, said method comprising the steps of:
transmitting an image with a whole field of view from the video camera to the second computer over said communications link at a resolution greater than said reduced resolution over a time period greater than the interval between successive frames of the video signal;
selecting one or more portions (42) of the field of view (44) represented by said image at the second computer, and transmitting information describing the selected portions to the first computer over said communications link;
processing the video signal generated by said video camera to retain those parts of the video signal corresponding to the selected portions of the whole field of view as specified in said transmitted information, and to discard the remaining parts of the video signal corresponding to the portions of the whole field of view which were not selected; and
transmitting said processed video signal from said first computer to said second computer over said communications link at a resolution greater than said reduced resolution up to a maximum resolution of the original image, wherein successive frames of the video signal are transmitted over a time period identical with said interval between successive frames of said video signal.

3. The method of claim 1 or 2, further comprising the step of performing data compression on the processed video signal prior to transmission to the second computer.

4. The method of any preceding claim, further comprising the step of examining at the first computer differences between successive video images within the selected portions of the field of view to detect movement.

5. The method of claim 4, further comprising the step of initiating additional action if the amount of detected movement exceeds a predetermined threshhold.

6. The method of claim 5, wherein said additional action comprises setting off an alarm.

7. The method of any of claims 1 to 3, further comprising the step of selecting at the second computer a sequence of adjacent portions of the field of view to pan across the field of view of the video camera.

8. The method of any preceding claim, wherein the step of processing the video signal comprises the steps of:
deriving a binary bit map (30) from the information describing the selected portions;
storing said bit map into a register; and
combining said bit map with each incoming video frame using a logical AND function.

9. A video workstation comprising a video camera (10) attached to a first computer (12), the first computer being linkable over a network (16) to a second computer (20) for digital communications including the exchange of control information between the first and second computers, wherein the video signal generated by the video camera has a bandwidth greater than the bandwidth available on said communications link so that said video signal can only be transmitted over said communications link at a reduced resolution, based on a predetermined frame rate, said workstation comprising:
means for transmitting an image with a whole field of view from the video camera to the second computer over said communications link at said reduced resolution;
means for selecting one or more portions (42) of the field of view (44) represented by said image at the second computer, and transmitting information describing the selected portions to the first computer over said communications link;
means for processing the video signal generated by said video camera to retain those parts of the video signal corresponding to the selected portions of the whole field of view as specified in said transmitted information, and to discard the remaining parts of the video signal corresponding to the portions of the whole field of view which were not selected; and
means for transmitting said processed video signal from said first computer to said second computer over said communications link at said predetermined frame rate and at a resolution greater than said reduced resolution, up to a maximum resolution of the original image.

10. A video workstation comprising a video camera (10) attached to a first computer (12), the first computer being linkable over a network (16) to a second computer (20) for digital communications including the exchange of control information between the first and second computers, wherein the video signal generated by the video camera has a bandwidth greater than the bandwidth available on said communications link so that said video signal can only be transmitted over said communications link at a reduced resolution, said workstation comprising:
means for transmitting an image with a whole field of view from the video camera to the second computer over said communications link at a resolution greater than said reduced resolution over a time period greater than the interval between successive frames of the video signal;
means for selecting one or more portions (42) of the field of view (44) represented by said image at the second computer, and transmitting information describing the selected portions to the first computer over said communications link;
means for processing the video signal generated by said video camera to retain those parts of the video signal corresponding to the selected portions of the whole field of view as specified in said transmitted information, and to discard the remaining parts of the video signal corresponding to the portions of the whole field of view which were not selected; and
means for transmitting said processed video signal from said first computer to said second computer over said communications link at a resolution greater than said reduced resolution up to a maximum resolution of the original image, wherein successive frames of the video signal are transmitted over a time period identical with said interval between successive frames of said video signal.

11. The workstation of claim 9 or 10, further comprising means for performing data compression on the processed video signal prior to transmission to the second computer.

12. The workstation of claim 9, 10, or 11, further comprising means for examining at the first computer differences between successive video images within the selected portions of the field of view to detect movement.

13. The workstation of claim 12, further comprising means for initiating additional action if the amount of detected movement exceeds a predetermined threshhold.

14. The workstation of claim 13, wherein said additional action comprises setting off an alarm.

15. The video workstation of any of claims 9 to 14, wherein the means for processing the video signal comprises:
means fcr deriving a binary bit map (30) from the information describing the selected portions;
a register for storing said bit map;
and means for combining said bit map with each incoming video frame using a logical AND function.

## Patentansprüche

1. Verfahren zur Fernbedienung einer Videokamera (10), die mittels eines zweiten Rechners (20) an einen ersten Rechner (12) angeschlossen ist, wobei der erste und der zweite Rechner eine Verbindungsleitung (16) für digitale Übertragungen einschließlich des Austauschs von Steuerinformationen haben, wobei die Bandbreite des von der Videokamera erzeugten Videosignals höher als die auf der Kommunikationsverbindung verfügbare Bandbreite ist, so dass das Videosignal auf der Grundlage einer vorher festgelegten Bildübertragungsgeschwindigkeit nur mit verringerter Auflösung über die Kommunikationsverbindung übertragen werden kann, wobei das Verfahren die folgenden Schritte umfasst:
Übertragen eines Bildes mit einem ganzen Sichtfeld mit der verringerten Auflösung von der Videokamera über die Kommunikationsverbindung an den zweiten Rechner;
Auswählen von einem oder mehreren Teilen (42) des Sichtfelds (44), das von dem Bild dargestellt wird, an dem zweiten Rechner und Übertragen von Informationen, welche die ausgewählten Teile beschreiben, über die Kommunikationsverbindung an den ersten Rechner;
Verarbeiten des von der Videokamera erzeugten Videosignals, um diejenigen Teile des Videosignals zu behalten, die den ausgewählten Teilen des ganzen Sichtfelds entsprechen, die in den übertragenen Informationen näher bezeichnet werden, und um die restlichen Teile des Videosignals, die den Teilen des ganzen Sichtfelds entsprechen, die nicht ausgewählt wurden, zu löschen; und
Übertragen des verarbeiteten Videosignals mit der vorher festgelegten Bildübertragungsgeschwindigkeit und mit einer Auflösung, die höher als die verringerte Auflösung ist, bis zu einer maximalen Auflösung des ursprünglichen Bildes, von dem ersten Rechner über die Kommunikationsverbindung an den zweiten Rechner.

2. Verfahren zur Fernbedienung einer Videokamera (10), die mittels eines zweiten Rechners (20) an einen ersten Rechner (12) angeschlossen ist, wobei der erste und der zweite Rechner eine Verbindungsleitung (16) für digitale Übertragungen einschließlich des Austauschs von Steuerinformationen haben, wobei die Bandbreite des von der Videokamera erzeugten Videosignals höher als die auf der Kommunikationsverbindung verfügbare Bandbreite ist, so dass das Videosignal nur mit verringerter Auflösung über die Kommunikationsverbindung übertragen werden kann, wobei das Verfahren die folgenden Schritte umfasst:
Übertragen eines Bildes mit einem ganzen Sichtfeld von der Videokamera über die Kommunikationsverbindung an den zweiten Rechner mit einer Auflösung, die höher als die verringerte Auflösung ist, über einen Zeitraum, der größer als das Intervall zwischen aufeinanderfolgenden Vollbildern des Videosignals ist;
Auswählen von einem oder mehreren Teilen (42) des Sichtfelds (44), das von dem Bild dargestellt wird, an dem zweiten Rechner und Übertragen von Informationen, welche die ausgewählten Teile beschreiben, über die Kommunikationsverbindung an den ersten Rechner;
Verarbeiten des von der Videokamera erzeugten Videosignals, um diejenigen Teile des Videosignals zu behalten, die den ausgewählten Teilen des ganzen Sichtfelds entsprechen, die in den übertragenen Informationen näher bezeichnet werden, und um die restlichen Teile des Videosignals, die den Teilen des ganzen Sichtfelds entsprechen, die nicht ausgewählt wurden, zu löschen; und
Übertragen des verarbeiteten Videosignals von dem ersten Rechner über die Kommunikationsverbindung an den zweiten Rechner mit einer Auflösung, die höher als die verringerte Auflösung ist, bis zu einer maximalen Auflösung des ursprünglichen Bildes, wobei aufeinanderfolgende Vollbilder des Videosignals über einen Zeitraum übertragen werden, der gleich dem Intervall zwischen aufeinanderfolgenden Vollbildern des Videosignals ist.

3. Verfahren nach Anspruch 1 oder 2, das des weiteren den Schritt der Durchführung einer Datenverdichtung an dem verarbeiteten Videosignal vor dessen Übertragung an den zweiten Rechner umfasst.

4. Verfahren nach jedem der vorhergehenden Ansprüche, das des weiteren den Schritt der Prüfung von Unterschieden zwischen aufeinanderfolgenden Videobildern innerhalb der ausgewählten Teile des Sichtfelds am ersten Rechner umfasst, um Bewegungen zu erkennen.

5. Verfahren nach Anspruch 4, das des weiteren den Schritt der Einleitung von zusätzlichen Maßnahmen umfasst, wenn das festgestellte Bewegungsaufkommen einen vorher festgelegten Schwellenwert überschreitet.

6. Verfahren nach Anspruch 5, wobei die zusätzlichen Maßnahmen das Auslösen eines Alarms umfassen.

7. Verfahren nach jedem der Ansprüche 1 bis 3, das des weiteren den Schritt der Auswahl einer Folge von benachbarten Teilen des Sichtfelds am zweiten Rechner umfasst, um über das Sichtfeld der Videokamera zu schwenken.

8. Verfahren nach jedem der vorhergehenden Ansprüche, wobei der Schritt der Verarbeitung des Videosignals die folgenden Schritte umfasst:
Ableiten einer binären Bitmap (30) von den Informationen, welche die ausgewählten Teile beschreiben;
Speichern der Bitmap in einem Register; und
Verknüpfen der Bitmap mit jedem eintreffenden Videovollbild unter Verwendung einer UND-Funktion.

9. Video-Arbeitsplatzrechner, der eine Videokamera (10) umfasst, die an einen ersten Rechner (12) angeschlossen ist, wobei der erste Rechner für digitale Übertragungen, einschließlich des Austauschs von Steuerinformationen zwischen dem ersten Rechner und dem zweiten Rechner, über ein Netzwerk (16) mit einem zweiten Rechner (20) verbunden werden kann, wobei die Bandbreite des von der Videokamera erzeugten Videosignals höher als die auf der Kommunikationsverbindung verfügbare Bandbreite ist, so dass das Videosignal auf der Grundlage einer vorher festgelegten Bildübertragungsgeschwindigkeit nur mit verringerter Auflösung über die Kommunikationsverbindung übertragen werden kann, wobei der Arbeitsplatzrechner folgendes umfasst:
Mittel zur Übertragung eines Bildes mit einem ganzen Sichtfeld mit der verringerten Auflösung von der Videokamera über die Kommunikationsverbindung an den zweiten Rechner;
Mittel zum Auswählen von einem oder mehreren Teilen (42) des Sichtfelds (44), das von dem Bild dargestellt wird, an dem zweiten Rechner und zum Übertragen von Informationen, welche die ausgewählten Teile beschreiben, über die Kommunikationsverbindung an den ersten Rechner;
Mittel zur Verarbeitung des von der Videokamera erzeugten Videosignals, um diejenigen Teile des Videosignals zu behalten, die den ausgewählten Teilen des ganzen Sichtfelds entsprechen, die in den übertragenen Informationen näher bezeichnet werden, und um die restlichen Teile des Videosignals, die den Teilen des ganzen Sichtfelds entsprechen, die nicht ausgewählt wurden, zu löschen; und
Mittel zur Übertragung des verarbeiteten Videosignals mit der vorher festgelegten Bildübertragungsgeschwindigkeit und mit einer Auflösung, die höher als die verringerte Auflösung ist, bis zu einer maximalen Auflösung des ursprünglichen Bildes, von dem ersten Rechner über die Kommunikationsverbindung an den zweiten Rechner.

10. Video-Arbeitsplatzrechner, der eine Videokamera (10) umfasst, die an einen ersten Rechner (12) angeschlossen -ist, wobei der erste Rechner für digitale Übertragungen, einschließlich des Austauschs von Steuerinformationen zwischen dem ersten Rechner und dem zweiten Rechner, über ein Netzwerk (16) mit einem zweiten Rechner (20) verbunden werden kann, wobei die Bandbreite des von der Videokamera erzeugten Videosignals höher als die auf der Kommunikationsverbindung verfügbare Bandbreite ist, so dass das Videosignal nur mit verringerter Auflösung über die Kommunikationsverbindung übertragen werden kann, wobei der Arbeitsplatzrechner folgendes umfasst:
Mittel zur Übertragung eines Bildes mit einem ganzen Sichtfeld von der Videokamera über die Kommunikationsverbindung an den zweiten Rechner mit einer Auflösung, die höher als die verringerte Auflösung ist, über einen Zeitraum, der größer als das Intervall zwischen aufeinanderfolgenden Vollbildern des Videosignals ist;
Mittel zum Auswählen von einem oder mehreren Teilen (42) des Sichtfelds (44), das von dem Bild dargestellt wird, an dem zweiten Rechner und zum Übertragen von Informationen, welche die ausgewählten Teile beschreiben, über die Kommunikationsverbindung an den ersten Rechner;
Mittel zur Verarbeitung des von der Videokamera erzeugten Videosignals, um diejenigen Teile des Videosignals zu behalten, die den ausgewählten Teilen des ganzen Sichtfelds entsprechen, die in den übertragenen Informationen näher bezeichnet werden, und um die restlichen Teile des Videosignals, die den Teilen des ganzen Sichtfelds entsprechen, die nicht ausgewählt wurden, zu löschen; und
Mittel zur Übertragung des verarbeiteten Videosignals von dem ersten Rechner über die Kommunikationsverbindung an den zweiten Rechner mit einer Auflösung, die höher als die verringerte Auflösung ist, bis zu einer maximalen Auflösung des ursprünglichen Bildes, wobei aufeinanderfolgende Vollbilder des Videosignals über einen Zeitraum übertragen werden, der gleich dem Intervall zwischen aufeinanderfolgenden Vollbildern des Videosignals ist.

11. Arbeitsplatzrechner nach Anspruch 9 oder 10, der des weiteren Mittel zur Durchführung einer Datenverdichtung an dem verarbeiteten Videosignal vor dessen Übertragung an den zweiten Rechner umfasst.

12. Arbeitsplatzrechner nach Anspruch 9, 10 oder 11, der des weiteren Mittel zur Prüfung von Unterschieden zwischen aufeinanderfolgenden Videobildern innerhalb der ausgewählten Teile des Sichtfelds am ersten Rechner umfasst, um Bewegungen zu erkennen.

13. Arbeitsplatzrechner nach Anspruch 12, der des weiteren Mittel zur Einleitung von zusätzlichen Maßnahmen umfasst, wenn das festgestellte Bewegungsaufkommen einen vorher festgelegten Schwellenwert überschreitet.

14. Arbeitsplatzrechner nach Anspruch 13, wobei die zusätzlichen Maßnahmen das Auslösen eines Alarms umfassen.

15. Video-Arbeitsplatzrechner nach jedem der Ansprüche 9 bis 14, wobei das Mittel zur Verarbeitung des Videosignals folgendes umfasst:
Mittel zum Ableiten einer binären Bitmap (30) von den Informationen, welche die ausgewählten Teile beschreiben;
ein Register zum Speichern der Bitmap;
und Mittel zum Verknüpfen der Bitmap mit jedem eintreffenden Videovollbild unter Verwendung einer UND-Funktion.

## Revendications

1. Procédé de mise en oeuvre à distance d'une caméra vidéo (10) rattachée à un premier ordinateur (12) au moyen d'un second ordinateur (20), les premier et second ordinateurs comportant une liaison (16) en vue de communications numériques comprenant l'échange d'informations de commande, dans lequel le signal vidéo généré par la caméra vidéo présente une largeur de bande plus grande que la bande passante disponible sur ladite liaison de communications, de sorte que ledit signal vidéo ne peut être transmis sur ladite liaison de communications qu'à une résolution réduite, basée sur une cadence de trames prédéterminée, ledit procédé comprenant les étapes consistant à :
transmettre une image comportant un champ de vision complet depuis la caméra vidéo vers le second ordinateur sur ladite liaison de communications à ladite résolution réduite,
sélectionner une ou plusieurs parties (42) du champ de vision (44) représenté par ladite image au niveau du second ordinateur, et transmettre des informations décrivant les parties sélectionnées au premier ordinateur sur ladite liaison de communications,
traiter le signal vidéo généré par ladite caméra vidéo afin de conserver les parties du signal vidéo qui correspondent aux parties sélectionnées du champ de vision complet telles qu'elles sont spécifiées dans lesdites informations transmises, et de rejeter les parties restantes du signal vidéo correspondant aux parties du champ de vision complet qui n'ont pas été sélectionnées, et
transmettre ledit signal vidéo traité depuis ledit premier ordinateur vers ledit second ordinateur sur ladite liaison de communications à ladite cadence de trames prédéterminée et à une résolution supérieure à ladite résolution réduite, allant jusqu'à la résolution maximum de l'image d'origine.

2. Procédé de mise en oeuvre à distance d'une caméra vidéo (10) rattachée à un premier ordinateur (12) au moyen d'un second ordinateur (20), les premier et second ordinateurs comportant une liaison (16) en vue de communications numériques comprenant l'échange d'informations de commande, dans lequel le signal vidéo généré par la caméra vidéo présente une largeur de bande plus grande que la bande passante disponible sur ladite liaison de communications, de sorte que ledit signal vidéo ne peut être transmis sur ladite liaison de communications qu'à une résolution réduite, ledit procédé comprenant les étapes consistant à :
transmettre une image comportant un champ de vision complet depuis la caméra vidéo vers le second ordinateur sur ladite liaison de communications à une résolution supérieure à ladite résolution réduite sur un intervalle de temps supérieur à l'intervalle entre des trames successives du signal vidéo,
sélectionner une ou plusieurs parties (42) du champ de vision (44) représenté par ladite image au niveau du second ordinateur, et transmettre des informations décrivant les parties sélectionnées vers le premier ordinateur sur ladite liaison de communications,
traiter le signal vidéo généré par ladite caméra vidéo afin de conserver les parties du signal vidéo qui correspondent aux parties sélectionnées du champ de vision complet telles qu'elles sont spécifiées dans lesdites informations transmises, et de rejeter les parties restantes du signal vidéo correspondant aux parties du champ de vision complet qui n'ont pas été sélectionnées, et
transmettre ledit signal vidéo traité depuis ledit premier ordinateur vers ledit second ordinateur sur ladite liaison de communications à une résolution supérieure à ladite résolution réduite allant jusqu'à la résolution maximum de l'image d'origine, dans lequel des trames successives du signal vidéo sont transmises sur un intervalle de temps identique audit intervalle entre des trames successives dudit signal vidéo.

3. Procédé selon la revendication 1 ou 2, comprenant en outre l'étape consistant à réaliser une compression de données sur le signal vidéo traité avant sa transmission vers le second ordinateur.

4. Procédé selon l'une quelconque des revendications précédentes, comprenant en outre l'étape consistant à examiner, au niveau du premier ordinateur, des différences entre des images vidéo successives à l'intérieur des parties sélectionnées du champ de vision afin de détecter un mouvement.

5. Procédé selon la revendication 4, comprenant en outre l'étape consistant à initier une action supplémentaire si la quantité de mouvement détecté dépasse un seuil prédéterminé.

6. Procédé selon la revendication 5, dans lequel ladite action supplémentaire comprend le déclenchement d'une alarme.

7. Procédé selon l'une quelconque des revendications 1 à 3, comprenant en outre l'étape consistant à sélectionner, au niveau du second ordinateur, une séquence de parties adjacentes du champ de vision afin d'explorer transversalement le champ de vision de la caméra vidéo.

8. Procédé selon l'une quelconque des revendications précédentes, dans lequel l'étape de traitement du signal vidéo comprend les étapes consistant à :
obtenir une mappe de bits binaire (30) à partir des informations décrivant les parties sélectionnées,
mémoriser ladite mappe de bits dans un registre, et
combiner ladite mappe de bits avec chaque trame vidéo arrivant en utilisant une fonction ET logique.

9. Poste de travail vidéo comprenant une caméra vidéo (10) rattachée à un premier ordinateur (12), le premier ordinateur pouvant être relié par l'intermédiaire d'un réseau (16) à un second ordinateur (20) en vue de communications numériques comprenant l'échange d'informations de commande entre les premier et second ordinateurs, dans lequel le signal vidéo généré par la caméra vidéo présente une largeur de bande supérieure à la bande passante disponible sur ladite liaison de communications, de sorte que ledit signal vidéo ne peut être transmis sur ladite liaison de communications qu'à une résolution réduite, basée sur une cadence de trames prédéterminée, ledit poste de travail comprenant :
un moyen destiné à transmettre une image présentant un champ de vision complet depuis la caméra vidéo vers le second ordinateur sur ladite liaison de communications à ladite résolution réduite,
un moyen destiné à sélectionner une ou plusieurs parties (42) du champ de vision (44) représenté par ladite image au niveau du second ordinateur, et à transmettre des informations décrivant les parties sélectionnées au premier ordinateur sur ladite liaison de communications,
un moyen destiné à traiter le signal vidéo généré par ladite caméra vidéo afin de conserver les parties du signal vidéo qui correspondent aux parties sélectionnées du champ de vision complet telles qu'elles sont spécifiées dans lesdites informations transmises, et de rejeter les parties restantes du signal vidéo qui correspondent aux parties du champ de vision complet qui n'ont pas été sélectionnées, et
un moyen destiné à transmettre ledit signal vidéo traité depuis ledit premier ordinateur vers ledit second ordinateur sur ladite liaison de communications à ladite cadence de trames prédéterminée et à une résolution supérieure à ladite résolution réduite, allant jusqu'à la résolution maximum de l'image d'origine.

10. Poste de travail vidéo comprenant une caméra vidéo (10) rattachée à un premier ordinateur (12), le premier ordinateur pouvant être relié par l'intermédiaire d'un réseau (16) à un second ordinateur (20) en vue de communications numériques comprenant l'échange d'informations de commande entre les premier et second ordinateurs, dans lequel le signal vidéo généré par la caméra vidéo présente une largeur de bande supérieure à la bande passante disponible sur ladite liaison de communications, de sorte que ledit signal vidéo ne peut être transmis sur ladite liaison de communications qu'à une résolution réduite, ledit poste de travail comprenant :
un moyen destiné à transmettre une image comportant un champ de vision complet depuis la caméra vidéo vers le second ordinateur sur ladite liaison de communications à une résolution supérieure à ladite résolution réduite, sur un intervalle de temps supérieur à l'intervalle entre des trames successives du signal vidéo,
un moyen destiné à sélectionner une ou plusieurs parties (42) du champ de vision (44) représenté par ladite image au niveau du second ordinateur, et à transmettre des informations décrivant les parties sélectionnées au premier ordinateur sur ladite liaison de communications,
un moyen destiné à traiter le signal vidéo généré par ladite caméra vidéo afin de conserver les parties du signal vidéo qui correspondent aux parties sélectionnées du champ de vision complet telles qu'elles sont spécifiées dans lesdites informations transmises, et de rejeter les parties restantes du signal vidéo qui correspondent aux parties du champ de vision complet qui n'ont pas été sélectionnées, et
un moyen destiné à transmettre ledit signal vidéo traité depuis ledit premier ordinateur vers ledit second ordinateur sur ladite liaison de communications à une résolution supérieure à ladite résolution réduite allant jusqu'à la résolution maximum de l'image d'origine, dans lequel des trames successives du signal vidéo sont transmises sur un intervalle de temps identique audit intervalle entre des trames successives dudit signal vidéo.

11. Poste de travail vidéo selon la revendication 9 ou la revendication 10, comprenant en outre un moyen destiné à réaliser une compression de données sur le signal vidéo traité avant sa transmission vers le second ordinateur.

12. Poste de travail selon la revendication 9, 10 ou 11, comprenant en outre un moyen destiné à examiner, au niveau du premier ordinateur, des différences entre des images vidéo successives à l'intérieur des parties sélectionnées du champ de vision afin de détecter un mouvement.

13. Poste de travail selon la revendication 12, comprenant en outre un moyen destiné à initier une action supplémentaire si la quantité de mouvement détecté dépasse un seuil prédéterminé.

14. Poste de travail selon la revendication 13, dans lequel ladite action supplémentaire comprend le déclenchement d'une alarme.

15. Poste de travail vidéo selon l'une quelconque des revendications 9 à 14, dans lequel le moyen destiné à traiter le signal vidéo comprend :
un moyen destiné à obtenir une mappe de bits binaire (30) à partir des informations décrivant les parties sélectionnées,
un registre destiné à mémoriser ladite mappe de bits,
et un moyen destiné à combiner ladite mappe de bits avec chaque trame vidéo entrante en utilisant une fonction ET logique.
